# EUROPEAN PATENT APPLICATION

(11) **EP 0 728 624 A2**
(43) Date of publication of application: **28.08.1996**
(21) Application number: 96102678.8
(22) Date of filing: 22.02.1996
(51) Int. Cl.: B60R 21/00

(54) **Method and apparatus for controlling an actuatable restraining device using predictive crash sensing**

(30) Priority: 24.02.1995 US 393733
(71) Applicant: TRW INC., Lyndhurst Ohio 44124 (US)
(72) Inventor: Swihart, William R., Torrance, CA 90503 (US); Lawrence, Albert F., IV, Redondo Beach, CA 90278 (US)
(74) Representative: Wagner, Karl H., Dipl.-Ing.

(57) **Abstract**

An apparatus controls an actuatable restraining device, the apparatus including an accelerometer for sensing crash acceleration. A controller determines a crash value functionally related to the crash acceleration and compares the determined crash value against a threshold value. A radar system is mounted to the vehicle and connected to the controller for determining target range target closing velocity, and angle of incidence. The threshold value is varied in response to at least one of the target range, target closing velocity, and angle of incidence. The controller provides an actuation signal when the determined crash value is greater than the threshold value.

## Description

### Technical Field

The present invention is directed to an actuatable restraint system and is particularly directed to a method and apparatus for controlling an actuatable restraining device in response to extrinsically sensed events through use of predictive crash sensing techniques.

### Background of the Invention

Actuatable occupant restraining devices for automotive vehicles are known. One particular type of restraining device includes an inflatable air bag mounted within the passenger compartment of the vehicle. The air bag has an associated, electrically actuatable ignitor, referred to as a squib. Some occupant restraint systems are actuated in response to vehicle deceleration, also referred to as crash acceleration. It has been proposed that an occupant restraint system can be actuated prior to the occurrence of a vehicle crash using a non-contact sensor.

Systems actuated in response to vehicle crash acceleration typically include an inertia sensing device electrically connected in series with the squib. The inertia sensor can be mounted at one of various locations in the vehicle for measuring the deceleration of the vehicle. When the inertia sensing device is subjected to a crash force greater than a predetermined value, the inertia sensing device closes an associated electrical circuit causing an electric current of sufficient magnitude and duration to be passed through the squib to ignite the squib. The squib, when ignited, ignites a combustible gas-generating composition and/or pierces a container of pressurized gas, which results in inflation of an air bag, actuation of a seat belt pre-tensioner, etc.

Many known inertia sensing devices used in actuatable passenger restraint systems are mechanical in nature. Such devices are typically mounted to the vehicle and include a pair of mechanically actuatable switch contacts and a resiliently biased weight. The weight is arranged such that when the vehicle decelerates, the weight physically moves relative to its mounting. The greater the amount and duration of the deceleration, the further the weight moves against the bias force. The switch contacts are mounted relative to the biased weight such that, when the weight moves a predetermined distance, the weight moves over or against the switch contacts causing them to close. When the switch contacts of each of the inertia sensors connected in series with the squib close, the squib is connected to a source of electrical energy sufficient to ignite the squib.

Still other known actuatable passenger restraint systems for vehicles include an electrical transducer or accelerometer for sensing vehicle deceleration. The transducer provides an electrical signal having a value proportional to the vehicle's deceleration. Such systems include a monitoring or evaluation circuit connected to the output of the transducer.

The monitoring circuit processes the transducer output signal. The processing of the accelerometer signal and determination of whether a deployment crash event is occurring is the subject of several issued U.S. Patents. Known processing techniques include (i) integration of the acceleration signal to determine crash velocity, (ii) double integration of the acceleration signal to determined crash displacement, (iii) differentiation of the acceleration signal to determine crash jerk, (iv) frequency component monitoring to determine the presence of certain frequency components in the acceleration signal, or (v) determination of crash energy from the acceleration signal. Each of these techniques is referred to in the art as "the crash algorithm." For any particular crash algorithm used, the determined crash value ("crash metric") is typically compared against a predetermined threshold value. If the threshold value is exceeded or if certain values are determined to be present, a deployment crash event is considered to be occurring.

These metrics are used to distinguish between a deployment crash condition and a non-deployment crash condition. A non-deployment crash condition is one in which seat belts alone are sufficient to restrain the occupant and one in which deployment of the occupant's air bag will not enhance protection. A deployment crash condition is one in which deployment of the occupant's air bag will hopefully enhance protection for the occupant.

It is not desirable to inflate a vehicle air bag upon the occurrence of a non-deployment crash condition. Such needless deployment only increases the expense of repairing the vehicle after the crash event. A major problem that each of the crash algorithms of the prior art is concerned is the discrimination between a deployment crash event and a non-deployment crash event. Typically, a 10 MPH zero degree off-set crash into a barrier is considered a non-deployment crash event. A 14 MPH zero degree off-set crash into a barrier is considered a deployment crash event. The margin between the two different crash events is relatively narrow. In addition to the difficulty of discriminating between such narrow margin crash events, other vehicle events occur that may result in an output from the accelerometer such as curb hits, undercarriage snags, etc., for which it is not desirable to deploy the air bag. The crash algorithm must be capable of identifying such events as non-deployment events.

Also of concern in an actutable restraining device is deployment timing. It is desirable to not only detect that a deployment crash event is occurring but to detect it early in the crash event so that the air bag deployment is timed to hopefully provide maximum protection. Reduction in time required to determine the occurrence of a deployment crash event allows additional control flexibility in tailoring air bag inflation rates, inflation pressures, and operation of other restraining devices such as seat belt pre-tensioning systems.

When using a radar system for sensing an impending crash event, it is desirable to avoid a "false alarm" deployment. A "false alarm" may occur when the radar sensor receives a reflected signal which is interpreted to be an imminent vehicle crash with an object when, in fact, the event does not pose a significant, if any, threat to the vehicle occupants. For example, such a false alarm event may occur as a result of a reflected signal from a small animal or a piece of blown cardboard or wood. Incorrect identification of a target as a real threat leaves the actuatable restraint susceptible to inadvertent deployment. Therefore, it is desirable to discriminate between targets which pose a real threat to the vehicle occupants and targets which do not.

### Summary of the Invention

The present invention provides a method and apparatus for controlling an actuatable restraining device in a vehicle. An accelerometer measures crash acceleration. A crash value is determined from the crash acceleration and is compared against a threshold value. A radar system monitors range and closing velocity between the vehicle and a target. The threshold value is varied in response to the determined range and closing velocity. When the determined crash value is greater than the threshold value, the restraining device is actuated.

In accordance with one aspect of the present invention, an apparatus is provided for controlling an actuatable restraining device. The apparatus comprises means for sensing crash acceleration and means for determining a crash value functionally related to the crash acceleration. The apparatus further includes means for comparing the determined crash value against a threshold value and means for varying the threshold value in response to at least one of target range, target closing velocity, and angle of incidence. The apparatus further includes means for providing an actuation signal when the determined crash value is greater than the threshold value.

In accordance with another aspect of the present invention, a method is provided for controlling an actuatable restraining device. The method comprises the steps of sensing crash acceleration and determining a crash value functionally related to the crash acceleration. The method further includes the steps of comparing the determined crash value against a threshold value and varying the threshold value in response to at least one of target range, target closing velocity, and the angle of incidence. The method further includes the step of providing an actuation signal when the determined crash value is greater than the threshold value.

### Brief Description of the Drawings

The foregoing and other features of the present invention will become apparent to one skilled in the art to which the present invention relates upon consideration of the following description of the invention with reference to the accompanying drawings, wherein:
Fig. 1 is a schematic block diagram of an air bag restraint system made in accordance with the present invention;
Figs. 2-3 are flow diagrams showing the control process of the present invention for the air bag restraint system shown in Fig. 1;
Figs. 4-6 are graphical representations of crash metric values for the restraint system shown in Fig. 1 for various crash conditions;
Figs. 7-9 are graphical representations of threshold value adjustments for the restraint system shown in Fig. 1; and
Figs. 10-12 are flow chart diagrams showing an alternative control process of the present invention.

### Description of Preferred Embodiment

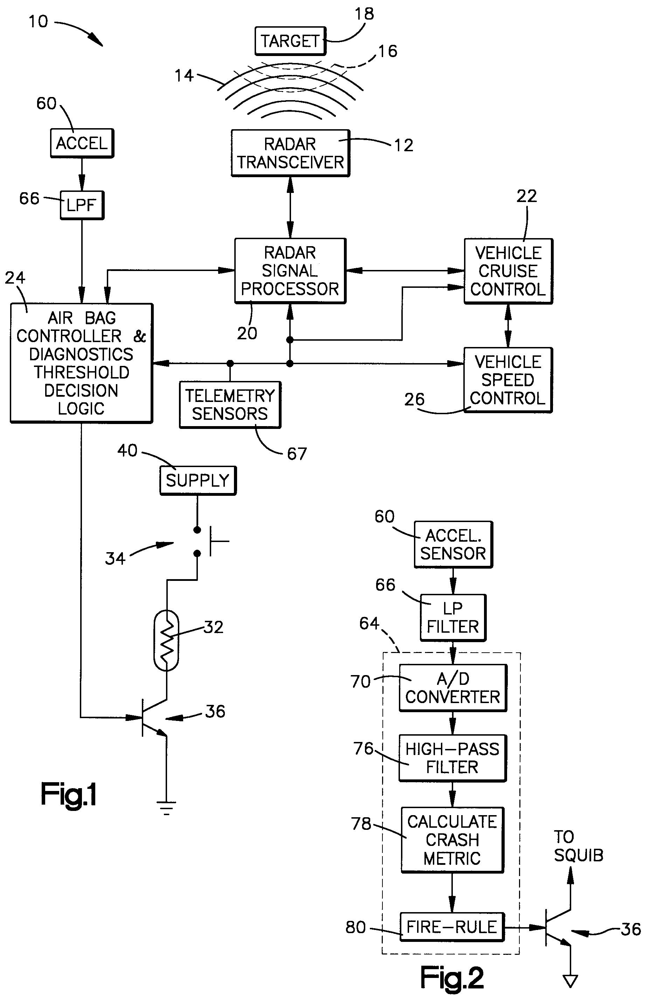

Referring to Fig. 1, an air bag restraint control circuit 10 includes a radar transceiver 12 which is operatively mounted on the vehicle. Preferably, transceiver 12 utilizes a Frequency Modulated Continuous Wave (FMCW) radar signal having a carrier wave frequency of 94 GHz and a frequency modulation signal that varies between 100 MHz and 300 MHz. Those skilled in the art will appreciate that FM chirp, pulsed chirp, pulsed doppler, or other radar systems could be used.

Transceiver 12 is mountable on a vehicle in a forward facing direction so as to transmit signals 14 and receive reflected signals 16 from a target 18. Transceiver 12 is electrically connected to a radar signal processor 20. Radar signal processor 20, using methods known in the art, processes the reflected radar signal 16 to (i) detect targets within the radar "scene" and, (ii) track a target once detected. Target detection includes classifying a target as a real threat or clutter. Tracking includes using algorithms to determine the trajectory of the target and monitor changes in position and trajectory of the target.

Radar signal processor 20 is electrically connected to a vehicle cruise control 22 and an air bag controller 24. Radar signal processor 20 provides electric signals having characteristics indicative of target detection and target trajectory to cruise control 22 and air bag controller 24. The electrical signals from radar signal processor 20 may also be used by other known vehicle systems, for example, object warning systems, collision warning and avoidance systems, and blind spot detection.

Vehicle cruise control 22 is operatively connected to vehicle speed control 26. Vehicle speed control 26 includes vehicle components used in known cruise control systems that monitor and control vehicle acceleration and speed.

The electrical signals from radar signal processor 20 may be used by cruise control 22 and the speed control 26 to not only regulate vehicle speed and acceleration but may also be used to avoid collisions such as brake control.

Air bag controller 24 is operatively connected to an electrically actuatable squib 32. Squib 32 is operatively connected to a gas-generating composition and/or container of pressurized gas (not shown). Specifically, controller 24 is connected to a switching transistor 36. The squib 32 is electrically connected in series with a mechanical inertia switch 34 and the transistor switch 36 between a source of electrical energy 40 and electrical ground. The switch 36 is controlled in an ON or OFF mode. When the switch 36 is actuated, i.e., ON, electric current can flow through the transistor.

An accelerometer 60 is mounted to the vehicle and provides an electric signal having a characteristic indicative of vehicle deceleration. The accelerometer 60 is electrically connected to controller 24 through a low-pass filter or anti-alias filter 66. Preferably, the controller 24 is a microcomputer having an internal memory and an internal analog-to-digital ("A/D") converter. The output of the low pass filter 66 is connected to an A/D converter input of the controller 24.

The controller 24 monitors the filtered acceleration signal and performs an analysis on the signal to determine if a vehicle crash is occurring. Specifically, a determined crash metric value is compared against its associated crash metric threshold value to determine whether a deployment crash event is occurring. If a deployment crash event is determined to be occurring, switch 36 is actuated to an ON condition. When a vehicle crash occurs with sufficient intensity to close the inertia switch 34, and for which the controller actuates switch 36, a current of sufficient magnitude and duration to ignite the squib passes through the squib 32. When the squib 32 is ignited, it, in turn, ignites a gas generating composition and/or pierces a container of pressurized gas which inflates the air bag. Other vehicle telemetry sensors 67 such as vehicle speed sensors, steering angle sensors, throttle position sensors, and brake level sensors, are connected to controller 24. Preferably, the telemetry data from sensor 67 is shared between all modules 20, 22, 24, and 26 either through a direct connection or a vehicle multiplex bus.

In Fig. 2, the crash algorithm, in accordance with the present invention, used to control the switch 36 is shown in a quasi-flow chart form. The acceleration sensor 60 is connected to an internal A/D converter 70 of the controller 24 through the low-pass filter 66. The A/D converter 70 converts the acceleration signal into a digital signal. Internal to the controller 24, the converted acceleration signal is high-pass filtered by a digital filtering process 76. Digital filtering of a signal by a microcomputer is known in the art and is, therefore, not discussed herein in detail. The controller 24 calculates a crash metric value in step 78 based on the measured crash acceleration signal output from the accelerometer 60.

Any crash metric value may be used that is capable of discriminating between deployment and non-deployment crash conditions. Such crash metrics include crash acceleration, velocity, displacement, jerk, etc. A fire-rule or crash algorithm is performed in step 80. The present invention contemplates that crash metrics and crash algorithms disclosed in co-pending patent application to Carlin et al. Serial No. 08/177,232, filed January 4, 1994 entitled "Method and Apparatus for Controlling an Actutable Restraining Device" can be used. The crash algorithm typically compares one or more crash metric values against associated threshold values. If the crash metric value exceeds its associated threshold value, the switch 36 is actuated to an ON condition. In accordance with the present invention, the electrical signals from radar signal processor 20 are used by air bag controller 24 to adjust predetermined occupant restraint system crash metric threshold values.

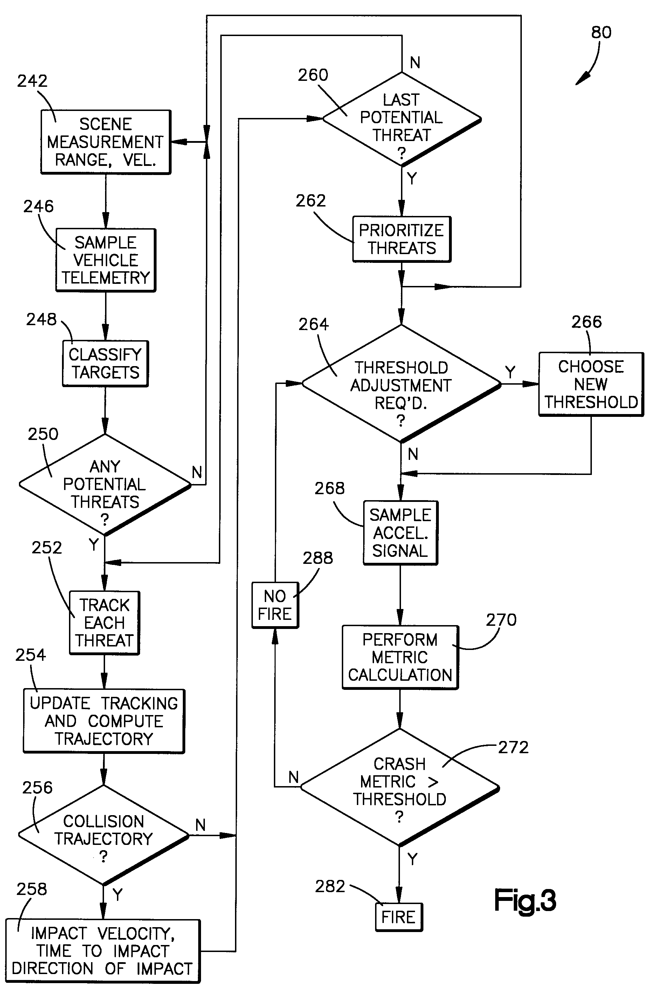

Referring to Fig. 3, the control process followed for the fire rule 80 will be better appreciated. The fire rule process 80 is continuously run from the time the vehicle is started. In step 242, radar transceiver 12 begins transmitting signals 14. Reflected signals 16 are received by transceiver 12. Transceiver 12 provides electrical signals to radar signal processor 20. The scene measurement includes processing return signal 16 so as to detect targets and track targets in the transceiver's "field of view." Tracking a target includes determining target range, relative velocity, and target trajectory or angle of incidence. Target detection and tracking may be accomplished using methods known in the art as described in "Radar Principles for the Non-Specialist", by J.C. Toomay, Van Nostrand Reinhold (1989) and "Introduction to Radar Systems", by Merril I. Skolnik, McGraw-Hill Book Company (1980), which are both fully incorporated by reference. Target range may be determined using one of the known methods described in the above incorporated references. Next, relative velocity of target 18 is determined by calculating the change in range with respect to time. Target angle may be determined using known methods described in the above-incorporated references.

In step 246, air bag controller 24 samples the vehicle telemetry sensors 67. In step 248, air bag controller 24 classifies the detected targets. Targets are classified as either clutter or real targets. Clutter includes return signals from road surfaces and small objects that are not likely to cause a deployment crash event if a collision occurs. Signals from clutter are filtered out using methods known in the art. Signals indicative of real targets are passed for further processing in step 250. In step 250, a determination is made as to whether the real target return signal represents a potential threat which could result in a deployment crash event.

The size of the real target, target range, relative velocity and trajectory angle are evaluated to determine whether the real target could result in causing a deployment crash event. If the determination in step 250 is negative, i.e. the real target is not a potential threat, the process returns to step 242. If the determination in step 250 is affirmative, the process proceeds to step 252 where the controller 24 tracks each potential threat by monitoring target range, relative velocity, and trajectory angle. More than one real target may be tracked simultaneously.

In step 254, the tracking is updated and the target trajectory for each potential threat is updated. Steps 254-260 are performed on each potential threat. In step 256, a determination is made as to whether one of the potential threats is on a collision trajectory with the vehicle. If the determination in step 256 is affirmative, i.e. the potential threat is on a collision trajectory, the process proceeds to step 258. In step 258, controller 24 determines impact velocity, time to impact, and direction of impact for each potential threat on a collision trajectory. If the determination in step 256 is negative or from step 258, the process proceeds to step 260. In step 260, a determination is made as to whether all detected potential threats identified in step 250 have been evaluated. If all of the potential threats identified in step 250 have not been evaluated as to whether they are potential threats on a collision trajectory, i.e., the determination is negative, the process returns to step 252.

When all the identified potential threats have been evaluated as to whether they are potential threats on a collision trajectory, i.e., the determination in step 260 is affirmative, the process proceeds to step 262 where the potential threats are prioritized. Targets that threaten to create the most serious potential impact with the vehicle are given the highest priority for later processing of the fire rule. The process of the present invention is essentially continuous, i.e., although target signals are acquired, evaluated as a threat, and prioritized, the radar system continuously monitors for new targets. Although one target has been identified and prioritized, another target may subsequently enter the radar's field of view that represents a more eminent and more serious collision threat. The priority target information is used in the further processing of the fire rule continuing on with step 264.

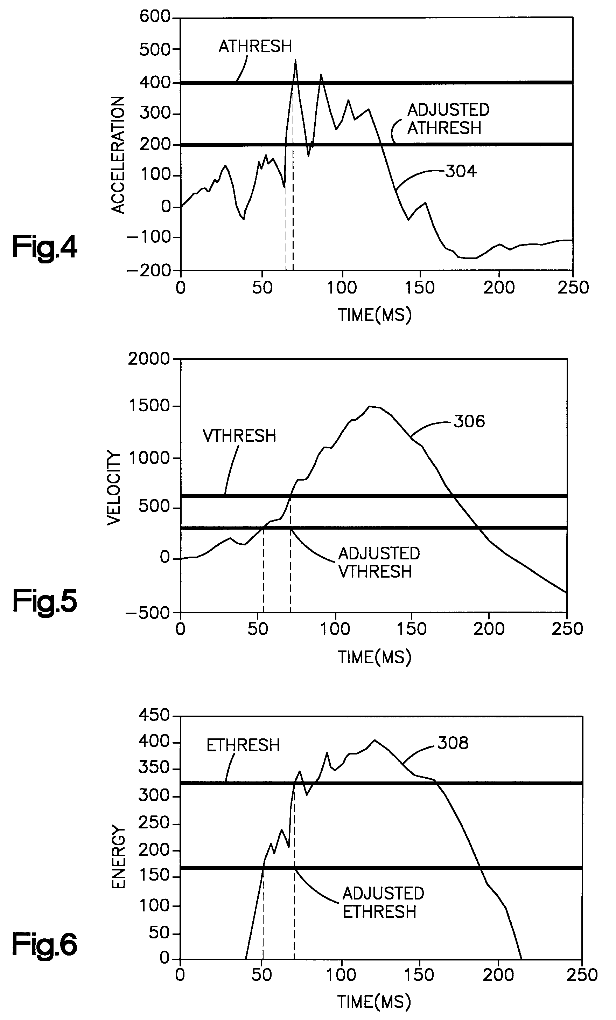

In step 264 a determination is made as to whether the algorithm threshold values require adjustment. A change in (i) relative velocity, (ii) time to impact, or (iii) target angle may require a change in a threshold value. For example, as relative velocity between the vehicle and one of the highest priority targets increases, the threshold values may be decreased. Referring to Figs. 4-9, graphical representations are shown which illustrate examples of threshold changes in accordance with the present invention.

Fig. 4 depicts a crash metric value 304 equal to the average acceleration value as a function of time. Fig. 5 depicts a crash metric value 306 equal to the crash velocity value as a function of time. Fig. 6 depicts a crash metric value 308 equal to crash energy as a function of time. Each of these three crash metric values are subsequently compared against associated threshold values, ATHRESH, VTHRESH, and ETHRESH, respectively. In step 264, a determination is made as to whether the value of any or all three of these threshold values should be adjusted in response to determined target closing velocity, target range, and/or angle of incidence of the target relative to a straight ahead direction. The specific functional relationship as to how any of the thresholds are to vary with respect to closing velocity, target range, and/or, angle of incident may be empirically determined for a vehicle platform of interest or determined using OEM provided crash data for a particular vehicle platform of interest. It is contemplated that the threshold variation may be unique to each vehicle platform or vehicle class.

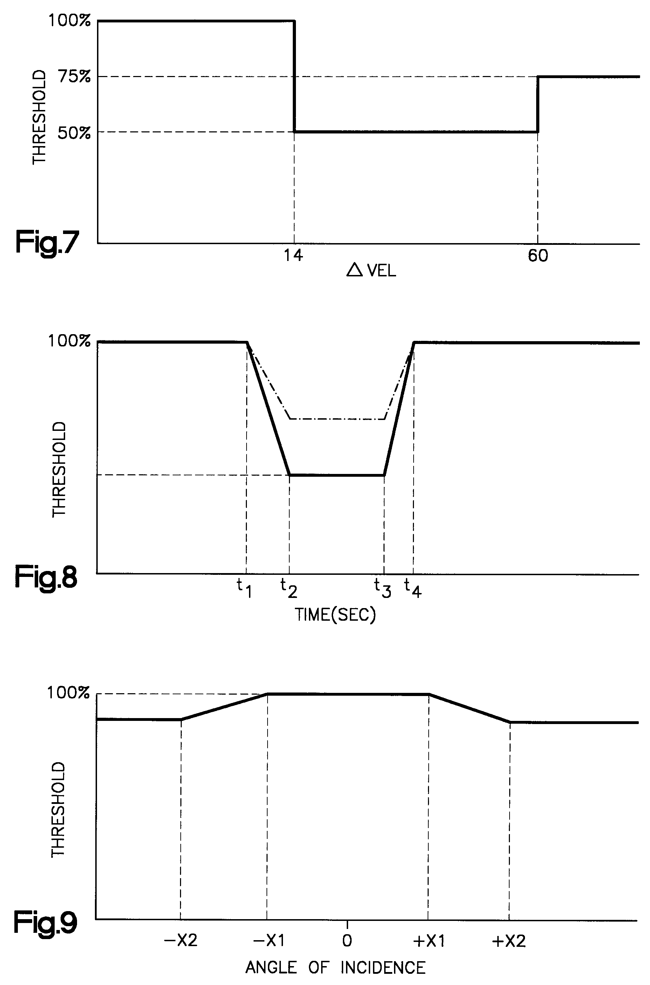

Figs. 7, 8, and 9 depict general shapes for threshold variation in response to closing velocity, target range (in terms of time to impact), and angle of incidence, respectively. Referring to Fig. 7, the threshold value starts out at 100% of its value as the closing velocity is zero. When the closing velocity reaches 14 mph, the threshold value is decreased to 50% of its original value. The threshold value remains at 50% between 14 mph and 60 mph. At 60 mph and higher the threshold value is 75% of its original value.

Referring to Fig. 8, the threshold value is at 100% when the time to impact is between 0 and t₁; the threshold decreased for t₁ to t₂; the threshold is at 50% from t₂ to t₃; the threshold increases from t₃ to t₄; and is at 100% at time to impact greater than t₄. The amount of the threshold reduction is dependent upon a confidence level. Confidence level is the measure of uncertainty and is response to vehicle speed, throttle angle, breaking level, wheel slip, and steering angle. Confidence is also a function of detection probabilities, false alarms, size of target, and quality of the radar data. If the confidence level is high, the threshold may be reduced by 50%. If the confidence level is not high, the threshold may be reduced to 75% of its original value. The dashed line for a threshold value is for a low confidence situation.

Referring to Fig. 9, the threshold is at 100% when the angle of incidence is within plus or minus X1 degrees of center; the threshold is on a decreasing value between X1 and X2 degrees of center; and the threshold is at a constant reduced value for angles greater than X2 from center.

The graphs depicted in Figs. 7-9 are given by way of example only. The thresholds may be changed in accordance with one or more of the closing velocity, time to impact, and angle of incidence.

If the determination in step 264 is negative, i.e. there is no change in relative velocity, time to impact, or trajectory angle, requiring an adjustment in algorithm thresholds, the process proceeds to step 268. If the determination in step 264 is affirmative, the process proceeds to step 266 where the threshold values are adjusted as described above.

In step 268, the accelerometer signal is sampled. In step 270, at least one crash metric value is determined. The process then proceeds to step 272. In step 272, the crash metric values are compared against their associated threshold values. A determination is made as to whether the value of the crash metric is greater than an associated threshold value. If the determination in step 272 is affirmative, the controller 24 proceeds to step 282 where switch 36 is actuated and the air bag deployed.

If the determination in step 272 is negative, the controller proceeds to step 288 where the switch 36 is maintained unactuated. The process then returns to step 264. If or when the inertia switch 34 is closed and switch 36 is actuated in step 282, an electric current will pass through the squib so as to ignite the squib and deploy the air bag. If, in accordance with the present invention, one of the threshold values is adjusted downward because of at least one of the closing velocity, the time to impact, and angle of incidence, the time to deployment will typically decrease.

Figs. 7-9 have shown threshold values that are decreased in response to closing velocity, time to impact, and angle of incidence. It is also contemplated that it may be desirable to increase the threshold value above its default condition in response to certain determined events.

Those skilled in the art will appreciate that the control process is a continuous, on-going process which is repeated each time a new acceleration value becomes available from the analog-to-digital converter. After the NO-FIRE step 288, the entire process is repeated. In each cycle, average acceleration, velocity, and energy values are determined, and FIRE or NO-FIRE decisions made based upon adjusted threshold values.

Those skilled in the art will appreciate that steps 242-266 of Fig. 3 may be performed in the radar controller. If a determination is made that threshold value needs adjusted, an interrupt signal would be sent to the air bag controller 24 with data indicative of the new threshold value to be used in the crash algorithm.

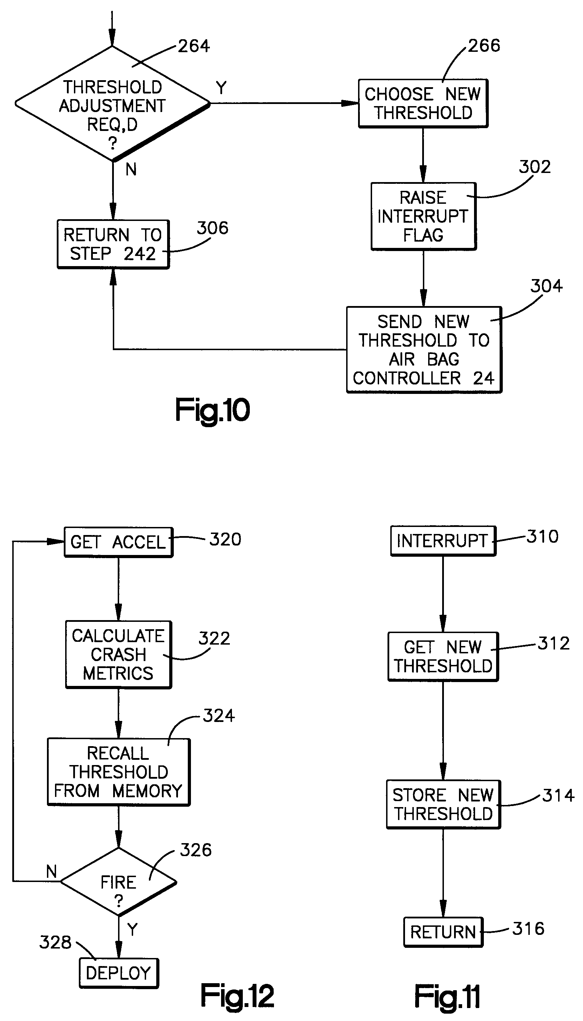

Referring to Figs. 10-12, step 242-266 described above would be carried out by the radar processor 20. If a new threshold were chosen in step 266, the processor 20 would raise an interrupt flag in step 302 and send a new threshold value (or values) to controller 24 in step 304. From either a negative determination in step 264 or from step 304, the process, in step 306 would return to step 242 described above.

Referring to Fig. 11, when controller 24 receives an interrupt signal in step 310, it gets the new threshold value (values) from controller 20 in step 312. The controller 24 stores the new threshold value in memory in step 314 and returns to its normal processing in step 316.

Referring to Fig. 12, the air bag controller 24 monitors the accelerometer signal in step 320 and calculates at least one crash metric value in step 322. In step 324, the controller 24 recalls the crash metric threshold value (values) from memory. The memory is loaded with an initial default value. The threshold value (values) may be up-dated in step 314. In step 326, the controller determines a fire rule using the threshold value recalled from memory in step 324, e.g., is the crash metric value determined in step 322 greater than threshold value recalled in step 324. If affirmative, the air bag is deployed in step 328. If negative, the process returns to step 320.

From the above description of the invention, those skilled in the art will perceive improvements, changes and modifications. Such improvements, changes and modifications within the skill of the art are intended to be covered by the appended claims.

## Claims

1. An apparatus for controlling an actuatable restraining device, said apparatus comprising:
means for sensing crash acceleration;
means for determining a crash value functionally related to said crash acceleration;
means for comparing said determined crash value against a threshold value;
means for varying said threshold value in response to at least one of target range, target closing velocity, and angle of incidence; and
means for providing an actuation signal when said determined crash value is greater than said threshold value.

2. The apparatus of claim 1 wherein said means for varying said threshold value includes means for decreasing said threshold value when said closing velocity increases.

3. The apparatus of claim 1 wherein said means for varying said threshold value includes means for decreasing said threshold value when said angle of incidence increases.

4. An apparatus for controlling an actuatable restraining device in a vehicle, said apparatus comprising:
means for sensing crash acceleration and providing a signal indicative of sensed crash acceleration;
means for determining a crash value functionally related to said crash acceleration;
means for comparing said determined crash value against a threshold value;
means for sensing range between said vehicle and a target;
means for varying said threshold value in response to said sensed target range; and
means for providing an actuation signal when said determined crash value is greater than said threshold value.

5. An apparatus for controlling an actuatable restraining device in a vehicle, said apparatus comprising:
means for sensing crash acceleration and providing a signal indicative of sensed crash acceleration;
means for determining a crash value functionally related to said crash acceleration;
means for comparing said determined crash value against a threshold value;
means for sensing relative closing velocity between said vehicle and a target;
means for varying said threshold value in response to said sensed closing velocity; and
means for providing an actuation signal when said determined crash value is greater than said threshold value.

6. An apparatus for controlling an actuatable restraining device in a vehicle, said apparatus comprising:
means for sensing crash acceleration and providing a signal indicative of sensed crash acceleration;
means for determining a crash value functionally related to said crash acceleration;
means for comparing said determined crash value against a threshold value;
means for sensing angle of incidence between said vehicle and a target;
means for varying said threshold value in response to said sensed angle of incidence; and
means for providing an actuation signal when said determined crash value is greater than said threshold value.

7. An apparatus for controlling an actuatable restraining device in a vehicle, said apparatus comprising:
means for sensing crash acceleration and providing a signal indicative of sensed crash acceleration;
means for determining a crash value functionally related to said crash acceleration;
means for comparing said determined crash value against a threshold value;
means for sensing relative closing velocity between said vehicle and a target;
means for sensing range between said vehicle and said target;
means for sensing angle of incidence between said vehicle and said target;
means for varying said threshold value in response to said sensed closing velocity, said sensed range, and said sensed angle of incidence; and
means for providing an actuation signal when said determined crash value is greater than said threshold value.

8. A method for controlling an actuatable restraining device, said method comprising the steps of:
sensing crash acceleration;
determining a crash value functionally related to said sensed crash acceleration;
comparing said determined crash value against a threshold value;
varying said threshold value in response to at least one of target range, target closing velocity, and angle of incidence; and
providing an actuation signal when said determined crash value is greater than said threshold value.

9. The method of claim 8 wherein said step of varying said threshold value includes the step of decreasing said threshold value when said closing velocity increases.

10. The method of claim 8 wherein said step of varying said threshold value includes the step of decreasing said threshold value when said angle of incidence increases.

11. The method of claim 9 wherein said step of determining a crash value includes determining crash velocity.
